# EUROPEAN PATENT SPECIFICATION

(11) **EP 3 020 496 B1**
(45) Date of publication and mention of the grant of the patent: **12.12.2018**
(21) Application number: 15190007.3
(22) Date of filing: 15.10.2015
(51) Int. Cl.: B23K 9/02, B23K 9/173, B23K 33/00, B23K 101/00

(54) **WELDING METHOD**
SCHWEISSVERFAHREN
PROCEDE DE SOUDAGE

(30) Priority: 29.10.2014 JP 2014219834
(43) Date of publication of application: 18.05.2016
(73) Proprietor: Yamaha Hatsudoki Kabushiki Kaisha, Iwata-shi, Shizuoka 438-8501 (JP)
(72) Inventor: SUZUKI, Takaharu, Iwata-shi, Shizuoka 438-8501 (JP)
(74) Representative: Grünecker Patent- und Rechtsanwälte PartG mbB

(56) References cited:
- DE-A1- 3 810 759
- JP-A- 2005 271 020
- US-A- 3 185 815
- US-A- 4 362 919
- US-A1- 2013 153 092
- US-A1- 2013 175 247

## Description

The present invention relates to a welding method for joining metal members together.

Welding techniques are widely used as techniques of joining metal members together. An example of a welding method is arc welding (see, for example, Japanese Laid-Open Patent Publication No. 5-23856). Arc welding is a welding method which utilizes a discharge phenomenon (arc discharge) within a gas to join metal members together.

Such welding techniques are used in various technological fields. By enhancing the strength of such welding, a metal product with higher strength can be obtained.

Moreover, prior art document DE 3810759 A1 discloses a method of weldingpipes and webs to form a gas-tight pipe wall, in particular for steam-boiler construction, with the use of the submerged-arc welding process, in which a wire-shaped weld filler metal is fed to the welding location by means of a welding head while producing an arc. In order to increase the welding speed and to improve theweld formation, the weld is produced by two welding heads arranged one behind the other, of which the first welding head, to produce a root pass, is directed towards theweb surface at a distance, corresponding approximately to the wire diameter of the weld filler metal, from the longitudinal edge of the web and is orientated at an angle ofbetween 0 and 20° to a reference plane, running at right angles to the web surface and parallel to the longitudinal edge of the web, towards the gap between pipe surface andside surface of the web in the area of approximately half the web thickness, and of which the second welding head, for the piercing welding of a cover pass, is inclinedrelative to the orientation of the first welding head by an angle of between 1° and 40° against the welding direction.

Prior art document US 4,362,919 discloses a method of welding which utilizes ametal electrode core encased within a pre-sintered ceramic insulating sleeve. Themethod comprising, preplacing a welding wire in the welding kerf formed between the pieces to be welded, tacking the welding wire in place such that the wire abuts thesurface of the pieces to be welded, guiding the metal core electrode rod encased in a ceramic pre-sintered sleeve over the welding wire, and simultaneously, torching thewelding wire so that a uniform weld deposit is formed.

An objective of the present invention is to provide a welding method which can enhance strength.

According to the present invention said object is solved by a welding method having the features of independent claim 1. Preferred embodiments are laid down in the dependent claims.

A welding method according to an embodiment of the present teaching is a welding method for welding a first member and a second member together, wherein the first member has a smaller thickness than a thickness of the second member, and a weldable portion of at least one of the first member and the second member has at least one of a curved surface and an embossed surface, the welding method comprising: a step of melting the first member and a filler to form a first bead on the first member; and a step of melting the first bead, the second member, and the filler to weld the first bead to the second member.

In one embodiment, the thickness of the second member may be 1.5 or more times as large as the thickness of the first member.

In one embodiment, a total thickness of the first member and the first bead may be substantially equal to the thickness of the second member.

In one embodiment, a second bead may be formed in the step in which the first bead is welded to the second member; and the second bead may have a greater cross-sectional area than a cross-sectional area of the first bead.

In one embodiment, the second bead may be formed by weaving.

In one embodiment, the first bead is formed by arc welding and the first bead is welded to the second member by arc welding.

In one embodiment, the first member and the second member may not be welded together in the step in which the first bead is formed on the first member; and the first member and the second member may be welded together in the step in which the first bead is welded to the second member.

A production method of a metal product according to an embodiment of the present teaching comprises the above welding method.

A metal product according to an embodiment of the present teaching comprises the first member and the second member welded together by using the above welding method.

A wheeled vehicle according to an embodiment of the present teaching comprises the first member and the second member welded together by using the above welding method.

In one embodiment of the present teaching, a first bead is formed on a thinner first member, and that first bead is welded to a second member, whereby a greater weld strength is provided. By previously forming a first bead on the thinner first member, the difference in thermal capacity between the first member side and the second member side can be reduced, thereby facilitating welding. Moreover, a greater weld strength can be obtained even when at least one of the first member and the second member has at least one of a curved surface and an embossed surface.

For example, the thickness of the second member may be 1.5 or more times as large as the thickness of the first member. Even when there is a large thickness difference between the first member and the second member, by previously forming a first bead on the thinner first member, the difference in thermal capacity between the first member side and the second member side can be reduced, thereby facilitating welding.

For example, a total thickness of the first member and the first bead may be substantially equal to the thickness of the second member. By substantially equalizing the thicknesses, approximately the same thermal capacity is attained at the first member side and the second member side, thereby further facilitating welding.

For example, a second bead that is formed in the step in which the first bead is welded to the second member may have a greater cross-sectional area than a cross-sectional area of the first bead. By increasing the welding area, a greater weld strength is provided.

For example, the second bead may be formed by weaving. By forming the second bead by weaving, it is possible to perform welding across a wider area.

For example, the first bead is formed by arc welding and the first bead is welded to the second member by arc welding. As a result, a greater weld strength can be realized during arc welding.

For example, the first member and the second member may not be welded together in the step in which the first bead is formed on the first member; and the first member and the second member may be welded together in the step in which the first bead is welded to the second member. By previously forming a first bead on the thinner first member before welding the first member and the second member together, the difference in thermal capacity between the first member side and the second member side can be reduced, thereby facilitating welding and enhancing weld strength.

A production method of a metal product according to an embodiment of the present teaching is a production method comprising the above welding method, whereby a metal product having a greater strength is produced.

A metal product according to an embodiment of the present teaching is formed by using the above welding method, whereby a metal product having a greater strength is provided.

A wheeled vehicle according to an embodiment of the present teaching comprises the first member and the second member welded together by using the above welding method, whereby a wheeled vehicle having a greater strength is obtained.

In one embodiment of the present teaching, a first bead is formed on a thinner first member, and that first bead is welded to a second member, whereby a greater weld strength is provided. By previously forming a first bead on the thinner first member, the difference in thermal capacity between the first member side and the second member side can be reduced, thereby facilitating welding. Moreover, a greater weld strength can be obtained even when at least one of the first member and the second member has at least one of a curved surface and an embossed surface.

These general and specific aspects may be implemented using a system, a method, and a computer program, and any combination of systems, methods, and computer programs.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

### BRIEF DESCRIPTION OF DRAWINGS

FIG. 1 is a diagram showing a welder according to an embodiment of the present teaching.
FIG. 2 is a flowchart showing a method of welding a first member and a second member according to an embodiment of the present teaching.
FIGS. 3A, 3B, and 3C are diagrams illustrating a method of welding a first member and a second member according to an embodiment of the present teaching.
FIGS. 4A, 4B, and 4C are diagrams illustrating a method of welding a first member and a second member according to an embodiment of the present teaching.
FIG. 5 is a diagram showing a first member and a second member welded together according to an embodiment of the present teaching, each member having a curved surface.
FIGS. 6A, 6B, and 6C are diagrams illustrating a method of welding a first member and a second member according to an embodiment of the present teaching.
FIGS. 7A, 7B, and 7C are diagrams illustrating a method of welding a first member and a second member according to an embodiment of the present teaching.
FIG. 8 a diagram showing a first member and a second member welded together according to an embodiment of the present teaching, each member having an embossed surface.
FIG. 9 a diagram showing a first member and a second member welded together according to an example not falling under the scope of the claims, each member having a planar shape.
FIG. 10 is a diagram showing a motorcycle produced by using a welding method according to an embodiment of the present teaching.
FIG. 11 is a diagram showing a front fender according to an embodiment of the present teaching.
FIGS. 12A and 12B are diagrams showing a fender body with a curved surface welded to a plate-shaped stay, according to an embodiment of the present teaching.
FIG. 13 is a diagram showing a head pipe and a main frame welded together according to an embodiment of the present teaching.

### DETAILED DESCRIPTION OF EMBODIMENTS

Hereinafter, with reference to the attached drawings, a welding method according to an embodiment of the present teaching will be described. In the description of the embodiment, similar constituent elements will be denoted by similar reference numerals, and any redundant description will be omitted.

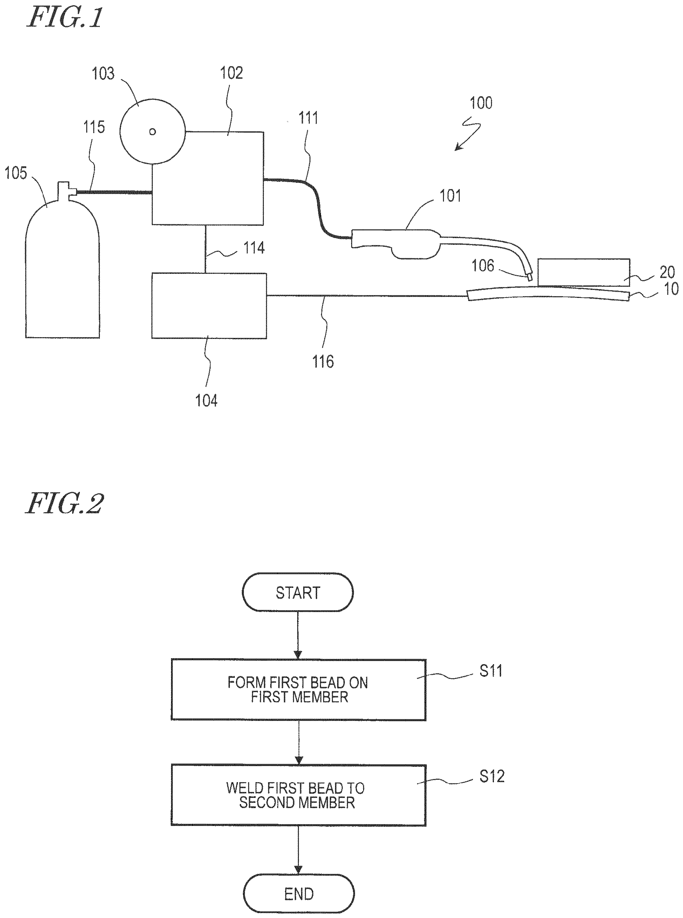

First, a welder according to an embodiment of the present teaching will be described. FIG. 1 is a diagram showing a welder 100 according to the present embodiment. The welder 100 shown in FIG. 1 is a semi-automatic arc welder. Although a semi-automatic arc welder is illustrated herein as an example, the present teaching is also applicable to an arc welding robot, a manual welder, and the like, for example, without being limited to a semi-automatic arc welder.

With reference to FIG. 1, the welder 100 includes a welding torch 101, a feeder 102, a wire reel 103, a power supply 104, and a gas cylinder 105. In this example, the first member 10 and the second member 20 are welded. Any arbitrary metal can be used as the materials of the first and second members 10 and 20, e.g., steel, stainless steel, and aluminum.

The welding torch 101 is a tool which supplies a filler, a current, a shielding gas, and the like to the first and second members 10 and 20 to be welded.

The feeder 102 feeds wire 106, as a filler, to the welding torch 101. The wire 106, which is wound in a thread-on-a-bobbin fashion on the wire reel 103, is pulled out by the feeder 102 so as to be supplied to the welding torch 101 via a hose 111.

A current is supplied from the power supply 104 to the feeder 102 via an electrical conduction line 114. A shielding gas is supplied from the gas cylinder 105 to the feeder 102 via a conduit 115. As the shielding gas, for example, an inert gas, a carbonic acid gas, or a gaseous mixture of an inert gas and a carbonic acid gas is used. The current and the shielding gas are supplied to the welding torch 101 via the hose 111, similarly to the wire 106. The first member 10 is connected to the power supply 104 via an electrical conduction line (ground line) 116. The feeder 102 and the power supply 104 may constitute an integral element.

When conducting welding, an arc discharge occurs between the wire 106 extending from the tip end of the welding torch 101 and at least one of the first and second members 10 and 20, whereby the wire 106 and the member(s) become melted to form a bead.

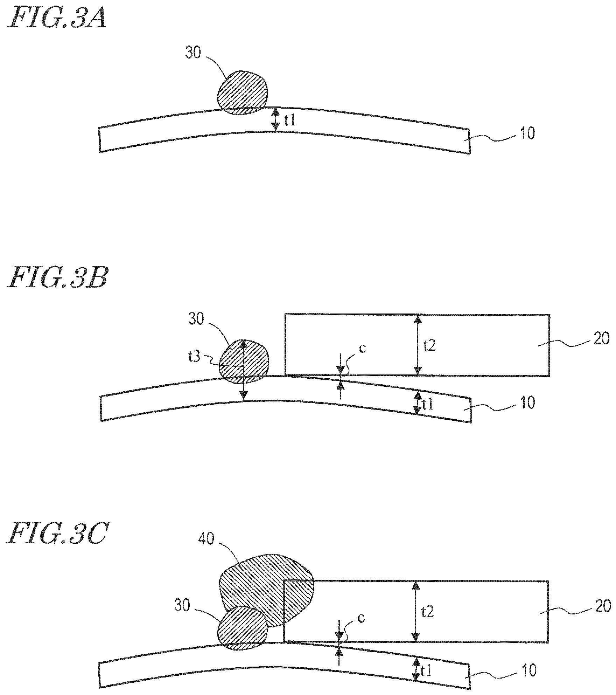

FIG. 2 is a flowchart showing a welding method for the first member 10 and the second member 20 according to the present embodiment. FIG. 3A to FIG. 3C are cross-sectional views showing a welding method of the first member 10 and the second member 20 according to the present embodiment. In the example shown in FIGS. 3A to 3C, the thickness t1 of the first member 10 is smaller than the thickness t2 of the second member 20, and the weldable portion of the first member 10 has a curved surface. Even when the members to be welded together have different thicknesses and a weldable portion has a curved surface, the welding method according to the present embodiment achieves welding with enhanced strength.

As the welding procedure, first, as shown in FIG. 3A, the first member 10, having a small thickness and presenting a curved surface, and the wire 106 (FIG. 1) are melted through an arc discharge, thus forming a first bead 30 on the first member 10 (step S11). The first bead 30 is formed along a direction which is perpendicular to the plane of the figure, for example. At this point, the first member 10 and the second member 20 are not welded together, and the first bead 30 is formed only on the first member 10. Therefore, the heat quantity to be supplied in welding may be set while only paying attention to the characteristics of the thinner first member 10, and thus the first bead 30 can be easily made. Moreover, since an appropriate heat quantity can be set, the first bead 30 can be formed across a broad area of the first member 10. This restrains stress from concentrating in one specific portion, for example, thus making for greater strength. For example, stress in the first bead 30 may be allowed to concentrate in two places at both sides of its cross section, thus providing for greater strength.

Next, as shown in FIG. 3B, the second member 20 is placed near the first bead 30. Although the thickness t2 of the second member 20 is greater than the thickness t1 of the first member 10, the difference in thermal capacity between the first member 10 side and the second member 20 side is reduced because the first bead 30 has previously been formed on the thinner first member 10, thereby facilitating the welding. For example, even when the thickness t2 of the second member 20 is 1.5 or more times as large as the thickness t1 of the first member 10, previously forming the first bead 30 on the first member 10 reduces the difference in thermal capacity between the first member 10 side and the second member 20 side, thereby facilitating the welding. Moreover, when the first bead 30 is formed so that a total thickness t3 of the first member 10 and the first bead 30 is substantially equal to the thickness t2 of the second member 20, the thermal capacity can be substantially equalized between the first member 10 side and the second member 20 side, thus further facilitating the welding.

Although the second member 20 is not in contact with the first bead 30 in this example, the second member 20 may be in contact with the first bead 30. Moreover, the second member 20 may or may not be in contact with the first member 10. Furthermore, the curved surface portion of the first member 10 is in contact with the planar portion of the second member 20 in this example, thus resulting in a clearance c between the first member 10 and the second member 20.

Next, as shown in FIG. 3C, the first bead 30, the second member 20, and the wire 106 (FIG. 1) are melted through an arc discharge to form a second bead 40, and the first bead 30 and the second member 20 are welded together (step S12). The second bead 40 is formed along the direction along which the first bead 30 is formed, for example. In this step of welding the first bead 30 and the second member 20 together, the first member 10 and the second member 20 become welded.

Thus, by previously forming the first bead 30 on the first member 10 and then welding the first bead 30 with the second member 20, an enhanced weld strength can be obtained. In particular, even when the first member 10 has a curved surface so as to result in a clearance c between the first member 10 and the second member 20, a greater weld strength can be obtained.

Although the first member 10 is not in contact with the second bead 40 in the example shown in FIG. 3C, they may be in contact with each other. For example, the second bead 40 may be formed so as to cover the entire first bead 30, so that the second bead 40 is in contact with the first member 10. The second bead 40 may be formed by weaving, for example, thereby facilitating welding in a broader area.

In the example shown in FIG. 3C, the second bead 40 has a greater cross-sectional area than does the first bead 30. For example, in the case where the first and second beads 30 and 40 have substantially circular cross-sectional shapes, the radius of the cross section of the second bead 40 is made greater than the radius of the cross section of the first bead 30. This increases the area of welding, thus enhancing weld strength.

Although the curved surface of the first member 10 has a shape which is convex toward where the second member 20 is disposed, the curved surface of the first member 10 may have a shape which concaves in this direction. Although this also results in a clearance c existing between the first member 10 and the second member 20, the welding method according to the present embodiment can provide a greater weld strength.

Thus, by using the welding method according to the present embodiment, a metal product in which the first member 10 and the second member 20 are welded together is produced. A production method that involves the welding method according to the present embodiment can provide a metal product with a greater strength.

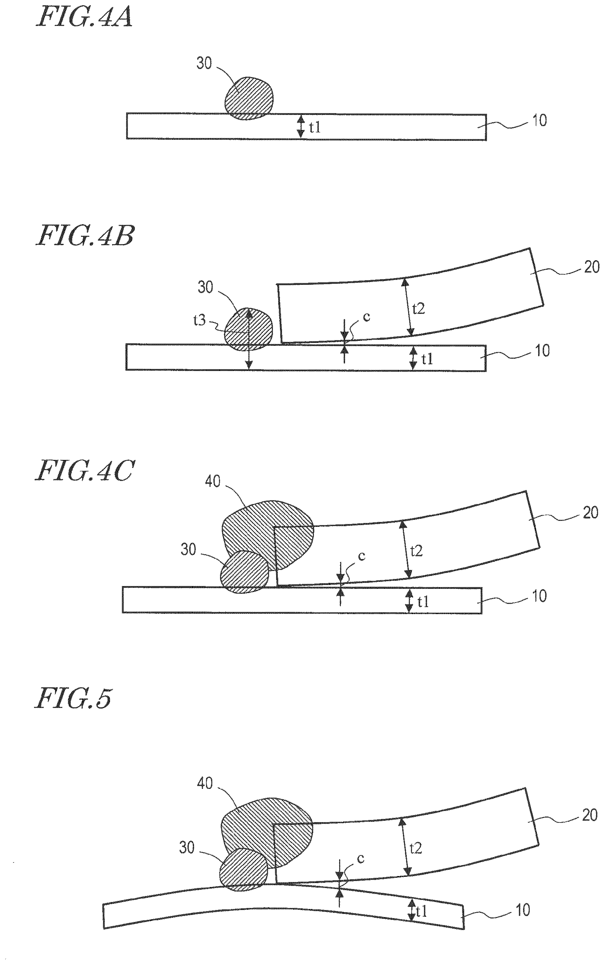

Although it is the first member 10 that has a curved surface in the example of FIG. 3, the second member 20 may alternatively have a curved surface. FIG. 4A to FIG. 4C are cross-sectional views showing a welding method for a second member 20 having a curved surface and a first member 10. In the example shown in FIG. 4, the thickness t1 of the first member 10 is smaller than the thickness t2 of the second member 20, the weldable portion of the second member 20 has a curved surface.

In this case, too, as shown in FIG. 4A, the thinner first member 10 and the wire 106 (FIG. 1) are melted through an arc discharge to first form a first bead 30 on the first member 10. The first bead 30 is formed along a direction which is perpendicular to the plane of the figure, for example. At this point, the first member 10 and the second member 20 are not welded together, and the first bead 30 is formed only on the first member 10. Therefore, the heat quantity to be supplied in welding may be set while only paying attention to the characteristics of the thinner first member 10, and thus the first bead 30 can be easily made. Moreover, since an appropriate heat quantity can be set, the first bead 30 can be formed across a broad area of the first member 10. This restrains stress from concentrating in one specific portion, for example, thus making for greater strength. For example, stress in the first bead 30 may be allowed to concentrate in two places at both sides of its cross section, thus providing for greater strength.

Next, as shown in FIG. 4B, the second member 20 is placed near the first bead 30. Although the thickness t2 of the second member 20 is greater than the thickness t1 of the first member 10, the difference in thermal capacity between the first member 10 side and the second member 20 side is reduced because the first bead 30 has previously been formed on the thinner first member 10, thereby facilitating the welding. For example, even when the thickness t2 of the second member 20 is 1.5 or more times as large as the thickness t1 of the first member 10, previously forming the first bead 30 on the first member 10 reduces the difference in thermal capacity between the first member 10 side and the second member 20 side, thereby facilitating the welding. Moreover, when the first bead 30 is formed so that a total thickness t3 of the first member 10 and the first bead 30 is substantially equal to the thickness t2 of the second member 20, the thermal capacity can be substantially equalized between the first member 10 side and the second member 20 side, thus further facilitating the welding.

Although the second member 20 is not in contact with the first bead 30 in this example, the second member 20 may be in contact with the first bead 30. Moreover, the second member 20 may or may not be in contact with the first member 10. In this example, the planar portion of the first member 10 is in contact with the curved surface portion of the second member 20, thus resulting in a clearance c between the first member 10 and the second member 20.

Next, as shown in FIG. 4C, the first bead 30, the second member 20, and the wire 106 (FIG. 1) are melted through an arc discharge to form a second bead 40, and the first bead 30 and the second member 20 are welded together. The second bead 40 is formed along the direction along which the first bead 30 is formed, for example. In this step of welding the first bead 30 and the second member 20 together, the first member 10 and the second member 20 become welded.

Thus, by previously forming the first bead 30 on the first member 10 and then welding the first bead 30 with the second member 20, an enhanced weld strength can be obtained. In particular, even when the second member 20 has a curved surface so as to result in a clearance c between the first member 10 and the second member 20, a greater weld strength can be obtained.

Although the first member 10 is not in contact with the second bead 40 in the example shown in FIG. 4C, they may be in contact with each other. For example, the second bead 40 may be formed so as to cover the entire first bead 30, so that the second bead 40 is in contact with the first member 10. The second bead 40 may be formed by weaving, for example, thereby facilitating welding in a broader area.

In the example shown in FIG. 4C, the second bead 40 has a greater cross-sectional area than does the first bead 30. For example, in the case where the first and second beads 30 and 40 have substantially circular cross-sectional shapes, the radius of the cross section of the second bead 40 is made greater than the radius of the cross section of the first bead 30. This increases the area of welding, thus enhancing weld strength.

Although the curved surface of the second member 20 has a shape which is convex toward where the first member 10 is disposed, the curved surface of the second member 20 may have a shape which concaves in this direction. Although this also results in a clearance c existing between the first member 10 and the second member 20, the welding method according to the present embodiment can provide a greater weld strength.

Note that the welding method according to the present embodiment provides a greater weld strength even when, as shown in FIG. 5, both of the first member 10 and the second member 20 have curved surfaces.

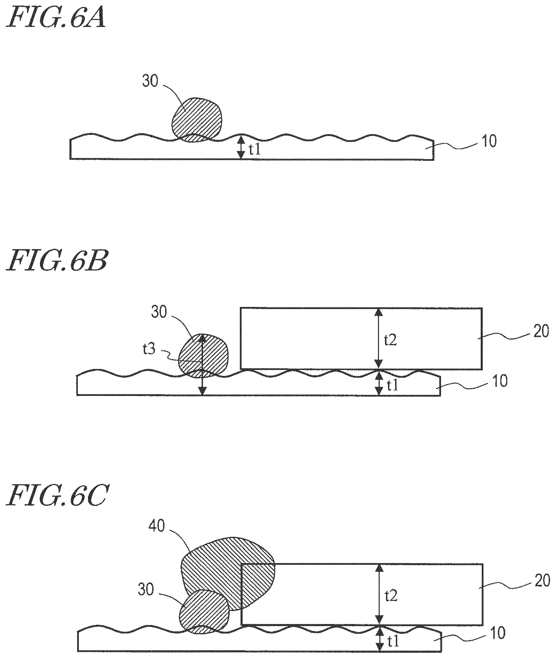

Moreover, the welding method according to the present embodiment provides a greater weld strength even when a member to be welded has an embossed surface. FIG. 6A to FIG. 6C are cross-sectional views showing a method of welding a first member 10 having an embossed surface and a second member 20. In the example shown in FIG. 6, the thickness t1 of the first member 10 is smaller than the thickness t2 of the second member 20, and the weldable portion of the first member 10 has an embossed surface. Even when the members to be welded together have different thicknesses and a weldable portion has an embossed surface, the welding method according to the present embodiment achieves welding with enhanced strength.

In the welding procedure, first, as shown in FIG. 6A, the thinner first member 10 having an embossed surface and the wire 106 (FIG. 1) are melted through an arc discharge to form a first bead 30 on the first member 10. The first bead 30 is formed along a direction which is perpendicular to the plane of the figure, for example. At this point, the first member 10 and the second member 20 are not welded together, and the first bead 30 is formed only on the first member 10. Therefore, the heat quantity to be supplied in welding may be set while only paying attention to the characteristics of the thinner first member 10, and thus the first bead 30 can be easily made. Moreover, since an appropriate heat quantity can be set, the first bead 30 can be formed across a broad area of the first member 10. This restrains stress from concentrating in one specific portion, for example, thus making for greater strength. For example, stress in the first bead 30 may be allowed to concentrate in two places at both sides of its cross section, thus providing for greater strength.

Next, as shown in FIG. 6B, the second member 20 is placed near the first bead 30. Although the thickness t2 of the second member 20 is greater than the thickness t1 of the first member 10, the difference in thermal capacity between the first member 10 side and the second member 20 side is reduced because the first bead 30 has previously been formed on the thinner first member 10, thereby facilitating the welding. For example, even when the thickness t2 of the second member 20 is 1.5 or more times as large as the thickness t1 of the first member 10, previously forming the first bead 30 on the first member 10 reduces the difference in thermal capacity between the first member 10 side and the second member 20 side, thereby facilitating the welding. Moreover, when the first bead 30 is formed so that a total thickness t3 of the first member 10 and the first bead 30 is substantially equal to the thickness t2 of the second member 20, the thermal capacity can be substantially equalized between the first member 10 side and the second member 20 side, thus further facilitating the welding.

Although the second member 20 is not in contact with the first bead 30 in this example, the second member 20 may be in contact with the first bead 30. Moreover, the second member 20 may or may not be in contact with the first member 10.

Next, as shown in FIG. 6C, the first bead 30, the second member 20, and the wire 106 (FIG. 1) are melted through an arc discharge to form a second bead 40, and the first bead 30 and the second member 20 are welded together. The second bead 40 is formed along the direction along which the first bead 30 is formed, for example. In this step of welding the first bead 30 and the second member 20 together, the first member 10 and the second member 20 become welded.

Thus, by previously forming the first bead 30 on the first member 10 and then welding the first bead 30 with the second member 20, an enhanced weld strength can be obtained. In particular, even when the first member 10 has an embossed surface, a greater weld strength can be obtained.

Although the first member 10 is not in contact with the second bead 40 in the example shown in FIG. 6C, they may be in contact with each other. For example, the second bead 40 may be formed so as to cover the entire first bead 30, so that the second bead 40 is in contact with the first member 10. The second bead 40 may be formed by weaving, for example, thereby facilitating welding in a broader area.

In the example shown in FIG. 6C, the second bead 40 has a greater cross-sectional area than does the first bead 30. For example, in the case where the first and second beads 30 and 40 have substantially circular cross-sectional shapes, the radius of the cross section of the second bead 40 is made greater than the radius of the cross section of the first bead 30. This increases the area of welding, thus enhancing weld strength.

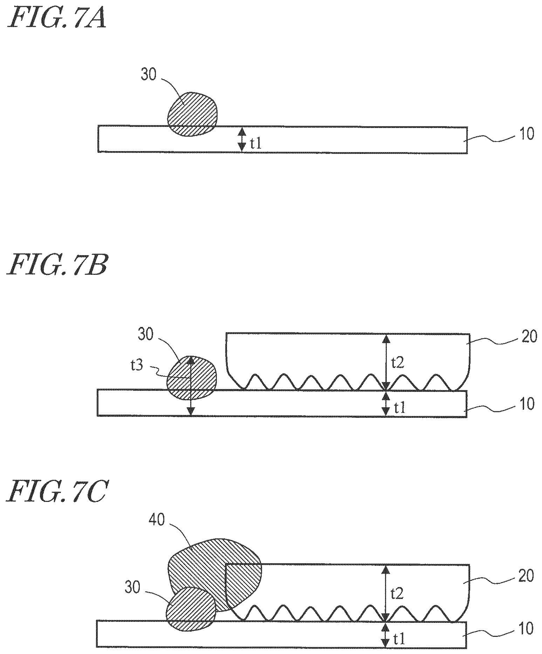

Although it is the first member 10 that has an embossed surface in the example of FIG. 6, the second member 20 may alternatively have an embossed surface. FIG. 7A to FIG. 7C are cross-sectional views showing a method of welding a second member 20 having an embossed surface and a first member 10. In the example shown in FIG. 7, the thickness t1 of the first member 10 is smaller than the thickness t2 of the second member 20, and the weldable portion of the second member 20 has an embossed surface. Even when the members to be welded together have different thicknesses and a weldable portion has an embossed surface, the welding method according to the present embodiment achieves welding with enhanced strength.

In this case, too, as shown in FIG. 7A, the thinner first member 10 and the wire 106 (FIG. 1) are melted through an arc discharge to first form a first bead 30 on the first member 10. The first bead 30 is formed along a direction which is perpendicular to the plane of the figure, for example. At this point, the first member 10 and the second member 20 are not welded together, and the first bead 30 is formed only on the first member 10. Therefore, the heat quantity to be supplied in welding may be set while only paying attention to the characteristics of the thinner first member 10, and thus the first bead 30 can be easily made. Moreover, since an appropriate heat quantity can be set, the first bead 30 can be formed across a broad area of the first member 10. This restrains stress from concentrating in one specific portion, for example, thus making for greater strength. For example, stress in the first bead 30 may be allowed to concentrate in two places at both sides of its cross section, thus providing for greater strength.

Next, as shown in FIG. 7B, the second member 20 is placed near the first bead 30. Although the thickness t2 of the second member 20 is greater than the thickness t1 of the first member 10, the difference in thermal capacity between the first member 10 side and the second member 20 side is reduced because the first bead 30 has previously been formed on the thinner first member 10, thereby facilitating the welding. For example, even when the thickness t2 of the second member 20 is 1.5 or more times as large as the thickness t1 of the first member 10, previously forming the first bead 30 on the first member 10 reduces the difference in thermal capacity between the first member 10 side and the second member 20 side, thereby facilitating the welding. Moreover, when the first bead 30 is formed so that a total thickness t3 of the first member 10 and the first bead 30 is substantially equal to the thickness t2 of the second member 20, the thermal capacity can be substantially equalized between the first member 10 side and the second member 20 side, thus further facilitating the welding.

Although the second member 20 is not in contact with the first bead 30 in this example, the second member 20 may be in contact with the first bead 30. Moreover, the second member 20 may or may not be in contact with the first member 10.

Next, as shown in FIG. 7C, the first bead 30, the second member 20, and the wire 106 (FIG. 1) are melted through an arc discharge to form a second bead 40, and the first bead 30 and the second member 20 are welded together. The second bead 40 is formed along the direction along which the first bead 30 is formed, for example. In this step of welding the first bead 30 and the second member 20 together, the first member 10 and the second member 20 become welded.

Thus, by previously forming the first bead 30 on the first member 10 and then welding the first bead 30 with the second member 20, an enhanced weld strength can be obtained. In particular, even when the second member 20 has an embossed surface, a greater weld strength can be obtained.

Although the first member 10 is not in contact with the second bead 40 in the example shown in FIG. 7C, they may be in contact with each other. For example, the second bead 40 may be formed so as to cover the entire first bead 30, so that the second bead 40 is in contact with the first member 10. The second bead 40 may be formed by weaving, for example, thereby facilitating welding in a broader area.

In the example shown in FIG. 7C, the second bead 40 has a greater cross-sectional area than does the first bead 30. For example, in the case where the first and second beads 30 and 40 have substantially circular cross-sectional shapes, the radius of the cross section of the second bead 40 is made greater than the radius of the cross section of the first bead 30. This increases the area of welding, thus enhancing weld strength.

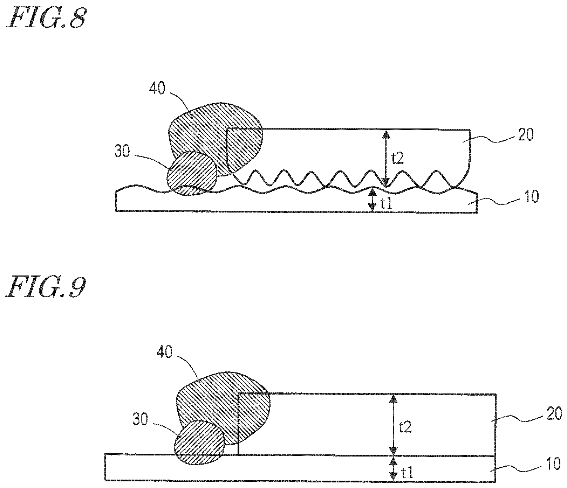

Note that the welding method according to the present embodiment provides a greater weld strength even when, as shown in FIG. 8, both of the first member 10 and the second member 20 have embossed surfaces.

Although the above description illustrates that the weldable portion of at least one of the first member 10 and second member 20 has at least one of a curved surface and an embossed surface, in a non-claimed example, the weldable portions of both of the first member 10 and second member 20 may have a planar shape. FIG. 9 is a diagram showing a first member 10 and a second member 20 welded together, the weldable portion of each having a planar shape. The welding method according to the present example provides a greater weld strength even when the weldable portions of both of the first member 10 and second member 20 have planar shapes.

Thus, by using the welding method according to the present embodiment, a metal product in which the first member 10 and the second member 20 are welded together is obtained. Such a metal product is mounted in a vehicle such as a wheeled vehicle. For example, the welding method according to the present embodiment is applicable to welding between members composing a fender of a motorcycle, welding between a head pipe and a frame, and so on.

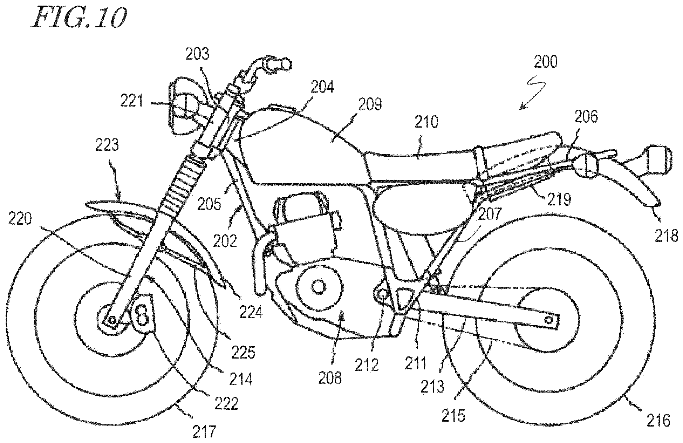

FIG. 10 is a diagram showing a motorcycle 200 which is produced by using the welding method according to the present embodiment. A body frame 202 of the motorcycle 200 in this example is a diamond frame, having a main frame 204 and down tubes 205 extending downwards toward the rear from the head pipe 203, a seat rail 206, a backstay 207, and the like, on which an engine 208, a fuel tank 209, a sheet 210, and the like are mounted.

Via a pivot axis 212, a rear arm bracket 211 couples a rear arm 213 so as to capable of swinging in up-down directions. The head pipe 203 supports front forks 214 so as to capable of pivoting. A rear wheel 216 is rotatably attached to the rear arm 213, such that driving force from the engine 208 is transmitted to the rear wheel 216 via a chain 215. A rear fender 218 made of a board material and a waterproofing cover 219 are provided above the rear wheel 216. A front wheel 217 is rotatably attached to the front forks 214.

The front forks 214 are telescopic front forks, including inner tubes 221 which are inserted at the upper ends of respective outer tubes 220, with a brake caliper 222 and a front fender 223 attached to the outer tubes 220. The front fender 223 includes a fender body 224 made of a board material and a stay 225 via which to attach the fender body 224 to the front forks 214, the stay 225 being composed of a pair of right and left tube members.

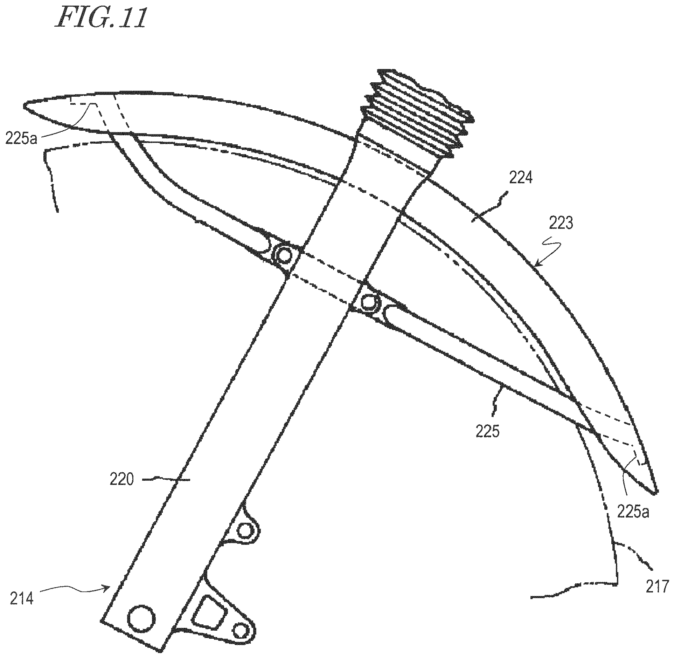

FIG. 11 is a diagram showing the front fender 223. The fender body 224 is formed by applying pressure forming to a substantially ellipse-shaped steel plate, so that its side face and transverse cross section each have a circular arc shape conforming to the front wheel 217. The stay 225 is formed by subjecting tube members, each having a length extending from the body-front end of the fender body 224 to the body-rear end of the fender body 224 to plastic working, so that ends 225a of the tube member is formed into a plate shape.

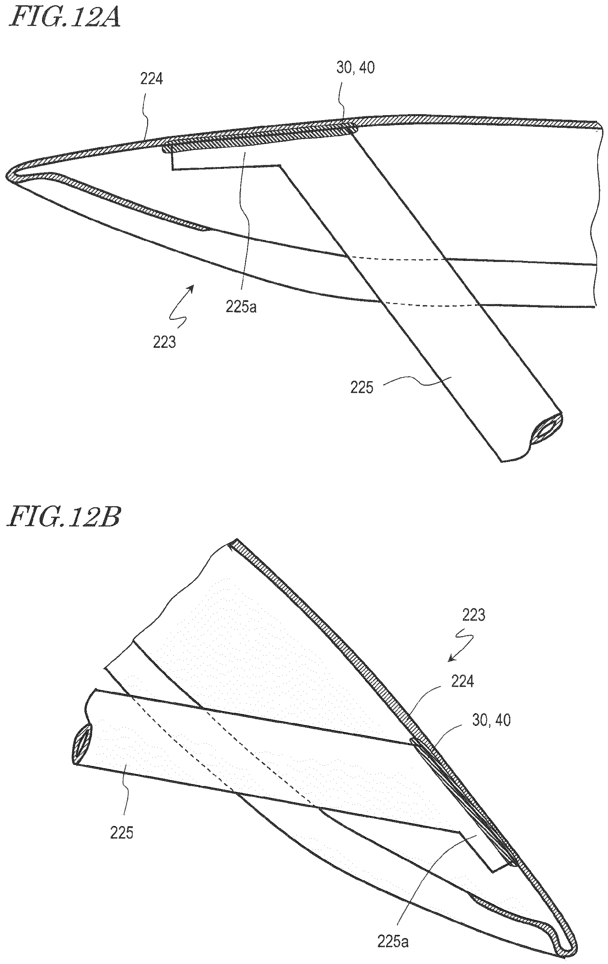

FIG. 12A is a diagram showing a state where the body-front end of the fender body 224 having a curved surface is welded to an end 225a of the plate-shaped stay 225 by using the welding method according to the present embodiment. FIG. 12B is a diagram showing a state where the body-rear end of the fender body 224 having a curved surface is welded to an end 225a of the plate-shaped stay 225 by using the welding method according to the present embodiment. In this example, the fender body 224 corresponds to the aforementioned first member 10, while the stay 225 corresponds to the aforementioned second member 20. Although the fender body 224 is thinner and has a curved surface, a greater weld strength can be obtained through a welding using the welding method according to the present embodiment.

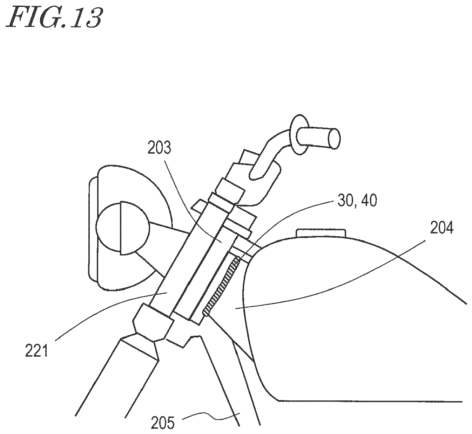

Moreover, the welding method according to the present embodiment can be used in welding the head pipe 203 to the main frame 204, for example. FIG. 13 is a diagram showing the head pipe 203 and the main frame 204 being welded together by using the welding method according to the present embodiment. In this example, one of the head pipe 203 and the main frame 204 corresponds to the aforementioned first member 10, while the other corresponds to the aforementioned second member 20. Although at least one of the head pipe 203 and the main frame 204 may have a curved surface and/or embossed surface at the weldable portion, a greater weld strength can be obtained through a welding using the welding method according to the present embodiment even in such cases.

Note that the illustrated instances of welding between members of a motorcycle are mere examples. A welding by the welding method according to the present embodiment can be applied to welding between other members, to also provide a greater weld strength.

In the above description, the vehicles in which welded metal members are mounted are wheeled vehicles such as motorcycles. However, without being limited to wheeled vehicles, the present teaching is also applicable to marine vessels and aircraft. Moreover, the vehicle is not limited to a transport machine on or in which a human rides, but may be a transport machine that undergoes unmanned operation. The present teaching is also applicable to machines such as robots and structures such as buildings. The present teaching is applicable to any machine or structure in which metal members are welded together for use.

The embodiments described above are for the purpose of illustrating the present teaching. Moreover, constituent elements described in the above embodiments may be combined into further embodiments.

The present teaching is particularly useful in technological fields where metal members are welded together.

## Claims

1. A welding method for welding a first member (10) and a second member (20) together, wherein the first member (10) has a smaller thickness (t1) than a thickness (t2) of the second member (20), and
a weldable portion of at least one of the first member (10) and the second member (20) has at least one of a curved surface and an embossed surface,
the welding method comprising:
a step of melting the first member (10) and a filler (106) to form a first bead (30) on the first member (10); and
a step of melting the first bead (30), the second member (20), and the filler (106) to weld the first bead (30) to the second member (20), wherein the first member (10) and the second member (20) are not welded together in the step in which the first bead (30) is formed on the first member (10); and
the first member (10) and the second member (20) are welded together in the step in which the first bead (30) is welded to the second member (20), wherein the at least one of a curved surface and an embossed surface of the at least one of the first member and the second member is arranged to face the other member.

2. A welding method of claim 1, wherein the thickness of the second member (20) is 1.5 or more times as large as the thickness of the first member (10).

3. A welding method of claim 1 or 2, wherein a total thickness of the first member (10) and the first bead (30) is substantially equal to the thickness of the second member (20).

4. A welding method of any of claims 1 to 3, wherein, a second bead (40) is formed in the step in which the first bead (30) is welded to the second member (20); and
the second bead (40) has a greater cross-sectional area than a cross-sectional area of the first bead (30).

5. A welding method of claim 4, wherein the second bead (40) is formed by weaving.

6. A welding method of any of claims 1 to 5, wherein the first bead (30) is formed by arc welding, and the first bead (30) is welded to the second member (20) by arc welding.

7. A production method of a metal product, comprising the welding method of any of claims 1 to 6.

## Patentansprüche

1. Ein Schweißverfahren zum Zusammenschweißen eines ersten Elements (10) und eines zweiten Elements (20), wobei das erste Element (10) eine kleinere Dicke (t1) als eine Dicke (t2) des zweiten Elements (20) hat, und
ein schweißbarer Abschnitt von zumindest einem von dem ersten Element (10) und dem zweiten Element (20) hat zumindest eine von einer gekrümmten Fläche und einer gewellten Fläche,
das Schweißverfahren umfasst:
einen Schritt des Schmelzens des ersten Elements (10) und eines Füllers (106), um eine erste Schweiß-Raupe (30) an dem ersten Element (10) auszubilden; und
einen Schritt des Schmelzens der ersten Schweiß-Raupe (30), des zweiten Elements (20) und des Füllers (106), um die erste Schweiß-Raupe (30) an dem zweiten Element (20) zu verschweißen, wobei das erste Element (10) und das zweite Element (20) in dem Schritt, in dem die erste Schweiß-Raupe (30) an dem ersten Element (10) ausgebildet ist, nicht zusammengeschweißt sind; und
das erste Element (10) und das zweite Element (20) sind in dem Schritt, in dem die erste Schweiß-Raupe (30) an dem zweite Element (20) verschweißt ist, zusammengeschweißt, wobei die zumindest eine von der gekrümmten Fläche und der gewellten Fläche von zumindest einem von dem ersten Element und dem zweiten Element angeordnet ist, um dem anderen Element zugewandt zu sein.

2. Ein Schweißverfahren von Anspruch 1, wobei die Dicke des zweiten Elements (20) 1,5 oder mehrfach größer ist als die Dicke des ersten Elements (10).

3. Ein Schweißverfahren gemäß Anspruch 1 oder 2, wobei eine gesamte Dicke des ersten Elements (10) und der ersten Schweiß-Raupe (30) im Wesentlichen gleich zu der Dicke des zweiten Elements (20) ist.

4. Ein Schweißverfahren gemäß irgendeinem der Ansprüche 1 bis 3, wobei eine zweite Schweiß-Raupe (40) in dem Schritt, in dem die erste Schweiß-Raupe (30) an dem zweiten Element (20) verschweißt ist, ausgebildet ist; und
die zweite Schweiß-Raupe (40) einen größeren Querschnitts-Bereich als ein Querschnitts-Bereich der ersten Schweiß-Raupe (30) hat.

5. Ein Schweißverfahren von Anspruch 4, wobei die zweite Schweiß-Raupe (40) durch Pendeln ausgebildet ist.

6. Ein Schweißverfahren gemäß irgendeinem der Ansprüche 1 bis 5, wobei die erste Schweiß-Raupe (30) durch Bogen-Schweißen ausgebildet ist, und die erste Schweiß-Raupe (30) ist an dem zweiten Element (20) durch Bogen-Schweißen verschweißt.

7. Ein Herstellungsverfahren eines Metall-Produkts, welches das Schweißverfahren von irgendeinem der Ansprüche 1 bis 6 umfasst.

## Revendications

1. Procédé de soudage pour souder ensemble un premier élément (10) et un second élément (20), le premier élément (10) ayant une épaisseur (t1) inférieure à une épaisseur (t2) du second élément (20), et
une partie pouvant être soudée d'au moins l'un parmi le premier élément (10) et le second élément (20) présente au moins l'une parmi une surface incurvée et une surface gaufrée,
le procédé de soudage comprenant :
une étape de fusion du premier élément (10) et d'une charge (106) pour former un premier bourrelet (30) sur le premier élément (10) ; et
une étape de fusion du premier bourrelet (30), du second élément (20), et de la charge (106) afin de souder le premier bourrelet (30) au second élément (20), le premier élément (10) et le second membre (20) n'étant pas soudés ensemble lors de l'étape dans laquelle le premier bourrelet (30) est formé sur le premier élément (10) ; et
le premier élément (10) et le second élément (20) sont soudés ensemble lors de l'étape dans laquelle le premier bourrelet (30) est soudé au second élément (20), la au moins une surface parmi une surface incurvée et une surface gaufrée du au moins un élément parmi le premier élément et le second élément étant agencée pour faire face à l'autre élément.

2. Procédé de soudage selon la revendication 1, dans lequel l'épaisseur du second élément (20) est 1,5 fois, ou plus, supérieure à l'épaisseur du premier élément (10).

3. Procédé de soudage selon la revendication 1 ou 2, dans lequel une épaisseur totale du premier élément (10) et du premier bourrelet (30) est sensiblement égale à l'épaisseur du second élément (20).

4. Procédé de soudage selon l'une quelconque des revendications 1 à 3, dans lequel, un second bourrelet (40) est formé lors de l'étape dans laquelle le premier bourrelet (30) est soudé au second élément (20) ; et le second bourrelet (40) a une aire en coupe transversale supérieure à l'aire en coupe transversale du premier bourrelet (30).

5. Procédé de soudage selon la revendication 4, dans lequel le second bourrelet (40) est formé par entrelacement.

6. Procédé de soudage selon l'une quelconque des revendications 1 à 5, dans lequel le premier bourrelet (30) est formé par soudage à l'arc, et le premier bourrelet (30) est soudé au second élément (20) par soudage à l'arc.

7. Procédé de production d'un produit métallique, comprenant le procédé de soudage selon l'une quelconque des revendications 1 à 6.
